# EUROPEAN PATENT APPLICATION

(11) **EP 2 582 068 A2**
(43) Date of publication of application: **17.04.2013**
(21) Application number: 12006987.7
(22) Date of filing: 09.10.2012
(51) Int. Cl.: H04B 7/08, H04B 7/06

(54) **Beamforming training within a wireless communication system utilizing a directional antenna**

(30) Priority: 11.10.2011 US 201161545941 P; 28.09.2012 US 201213630613
(71) Applicant: Broadcom Corporation, Irvine, CA 92617 (US)
(72) Inventor: Hansen, Christopher, Los Altos CA 94024 (US); Fischer, Matthew, Mountain View CA 94040 (US)
(74) Representative: Jehle, Volker Armin

(57) **Abstract**

A technique to identify that a station is capable of transmitting a PHY-BRP packet for use in training a directional antenna. The PHY-BRP packet is transmitted, when requested to do so, by appending the PHY-BRP packet to a BRP-Response in order to associate source and destination information to the PHY-BRP packet.

## Description

### CROSS REFERENCE TO RELATED APPLICATION

This application claims the benefit of priority under 35 U.S.C. 119(e) to U.S. Provisional Patent Application No. 61/545,941, filed 10/11/2011, which is incorporated herein by reference in its entirety for all purposes.

### BACKGROUND OF THE INVENTION

### TECHNICAL FIELD OF THE INVENTION

The embodiments of the invention relate to wireless communications and, more particularly, to linking of two devices at millimeter-wave bands.

### DESCRIPTION OF RELATED ART

Various wireless communication systems are known today to provide communication links between devices, whether directly or through a network. Such communication systems range from national and/or international cellular telephone systems, the Internet, point-to-point in-home systems, as well as other systems. Communication systems typically operate in accordance with one or more communication standards or protocols. For instance, wireless communication systems may operate using protocols, such as IEEE 802.11, Bluetooth^{™}, advanced mobile phone services (AMPS), digital AMPS, global system for mobile communications (GSM), code division multiple access (CDMA), local multi-point distribution systems (LMDS), multi-channel-multi-point distribution systems (MMDS), as well as others.

For each wireless communication device to participate in wireless communications, it generally includes a built-in radio transceiver (i.e., receiver and transmitter) or is coupled to an associated radio transceiver (e.g., a station for in-home and/or in-building wireless communication networks, modem, etc.). Typically, the transceiver includes a baseband processing stage and a radio frequency (RF) stage. The baseband processing provides the conversion from data to baseband signals for transmitting and baseband signals to data for receiving, in accordance with a particular wireless communication protocol. The baseband processing stage is coupled to a RF stage (transmitter section and receiver section) that provides the conversion between the baseband signals and RF signals. The RF stage may be a direct conversion transceiver that converts directly between baseband and RF or may include one or more intermediate frequency stage(s).

Furthermore, wireless devices typically operate within certain radio frequency ranges or bands established by regulatory agencies and utilized by one or more communication standards or protocols. The 2.4 GHz Band that encompasses the well-established WiFi and Bluetooth^{™} protocols has limited capacity and, therefore, limited data throughput. More recently, higher frequencies in the millimeter wave range are being utilized by newer 60 GHz standards to pursue the demand for much higher throughput. Using 60 GHz Band technology, high data rate transfers, such as real-time uncompressed/compressed high-definition (HD) video and audio streams, may be transferred wirelessly between two devices. Due to the inherent real-time requirement for the targeted applications, emerging 60 GHz standards explicitly define a Quality of Service (QoS) requirement for traffic streams to meet high throughput among devices.

One of the protocols/standards being developed utilizing the 60GHz Band is the IEEE 802.11ad standard. Devices operating in the 60 GHz Band, which is also referred to as D-Band (or DBand) by the IEEE 802.11ad standard, utilize directional communications, instead of omni-directional propagation of signals (such as at 2.4 and 5 GHz Bands) to overcome the severe path loss experienced at these higher frequencies. The 60 GHz Extended D-Band TSPEC describes the timing and traffic requirements of a traffic stream (TS) that exists within a network, such as a Personal Basic Service Set (PBSS) or Infrastructure Basic Service Set (IBSS) operating in the 60 GHz D-Band. The 60 GHz D-Band as specified by the Wireless Gigabit Alliance (WGA or WiGig), specifies that DBand devices utilize directional antennas in order to direct the transmitted spectrum energy. These developing 60 GHz standards call forth certain requirements for devices that are to be compliant to the protocols/standards. One enabling technology for directional signal propagation is beamforming, in which D-Band (and other millimeter wave) devices radiate the propagation energy from a directional antenna or an antenna array.

In order to establish a directional communication link, a typical approach is for an initiating D-Band device to initiate a sequence of transmissions over a sweep of a plurality of transmit sectors (beam propagation sectors) to cover the omni-directional (or quasi omni-directional) area, after which another D-Band device then responds with a sequence of transmissions over a sweep of its transmit sectors, as well as informing the initiating device which of the initiator's transmit sector is the best sector for communicating with the responder. After the responder completes its sector sweep, the initiator sends back a feedback signal to indicate which one of the responders sector is best suited for communicating with the initiator.

Beamforming allows a pair of stations (STAs) or an access point (AP) and a STA to train and orient their directional antennas for obtaining an optimal wireless connection to communicate with each other. Beamforming is established after the two devices follow through a successful training sequence as noted above. One feature of beamforming is beam refinement. Beam refinement is a process where an STA may improve its antenna configuration (or antenna weight and vector) for transmission and/or reception. In a beam refinement protocol procedure, Beam Refinement Protocol (BRP) packets are used to train a receiver.

One special type of BRP packet is known as a Physical Layer (PHY) BRP packet, or PHY-BRP packet. The PHY-BRP packet is an optional BRP packet that may be utilized in some devices, or it may not. It is optional, since some devices may not have the PHY-BRP packet capability. The PHY-BRP packet was introduced to simplify the receiver antenna weight and vector training. The PHY-BRP packet is short in duration, so that the total time for training is reduced. As currently stated in the specifications of at least one standard, a PHY-BRP packet has at least two shortcomings that affect the performance of 60 GHz and other millimeter wave devices. Firstly, not every device utilizes the PHY-BRP packet, so that there needs to be a way to distinguish when a particular device has the PHY-BRP packet capability. Secondly, the PHY-BRP packet does not have a PHY or MAC (Media Access Control) header, so that there may be ambiguity as to the source and intended destination of the transmitted PHY-BRP packet.

Accordingly, there is a need to find a solution for addressing these two shortcomings of the PHY-BRP packet.

### BRIEF SUMMARY OF THE INVENTION

According to an aspect, a method comprises:
transmitting an indication that a device is capable of transmitting a training packet to train a directional antenna to orient toward the device, in which the training packet does not include an address associated with the device sending the training packet;
receiving a request from a requester to send the training packet to the requester, in order to train the directional antenna of the requester;
responding to the request by sending a response from the device, in which the response includes an indication that the training packet to orient the directional antenna is appended to the response, the response including the address associated with the device; and
appending the training packet to the response and sending the appended training packet with the response.

Advantageously, the training packet is an optional packet to orient the directional antenna.

Advantageously, the training packet is an optional Beam Refinement Protocol (BRP) packet.

Advantageously, a value of a selected bit in the response is used as the indication that the training packet to orient the directional antenna is appended to the response.

Advantageously, a delay period is introduced between the response and the appended training packet.

Advantageously, the training packet is to be used to train and orient the directional antenna for millimeter wave transmission.

Advantageously, the training packet is to be used to train and orient the directional antennas for 60 GHz Band transmission.

According to an aspect, a method comprises:
transmitting an indication that a device is capable of transmitting a Physical-Beam Refinement Protocol (PHY-BRP) packet to train a directional antenna to orient toward the device, in which the PHY-BRP packet does not include an address associated with the device sending the PHY-BRP packet and in which a structure of the PHY-BRP packet is specified by a communication protocol;
receiving a BRP-Request from a requester to send the PHY-BRP packet to the requester, in order to train the directional antenna of the requester;
responding to the request by sending a BRP-Response from the device, in which the BRP-Response includes an indication that the PHY-BRP packet to orient the directional antenna is appended to the BRP-Response, the BRP-Response including the address associated with the device; and
appending the PHY-BRP packet to the BRP-Response and sending the appended PHY-BRP packet with the BRP-response.

Advantageously, the PHY-BRP packet is an optional BRP packet to orient the directional antenna.

Advantageously, a value of a selected bit in the BRP-response is used as the indication that the PHY-BRP packet to orient the directional antenna is appended to the BRP-response.

Advantageously, the indication that the device is capable of transmitting the PHY-BRP packet to train the directional antenna is included in a Capability Information Field sent by the device to identify capabilities of the device.

Advantageously, a value of a selected bit in the Capability Information Field is used as the indication that the device is capable of transmitting the PHY-BRP packet to train the directional antenna.

Advantageously, a delay period is introduced between the BRP-Response and the appended PHY-BRP packet.

Advantageously, the PHY-BRP packet is to be used to train and orient the directional antenna for millimeter wave transmission.

Advantageously, the PHY-BRP packet is to be used to train and orient the directional antenna for 60 GHz Band transmission.

Advantageously, the communication protocol is based on an IEEE802.11ad specification.

According to an aspect, an apparatus comprises:
a transmitter to transmit radio frequency (RF) signals;
a receiver to receive RF signals; and
a baseband processor module, including a processor and coupled to the transmitter and the receiver, to provide processing of packets specified by a communication protocol to:
   transmit an indication that a device is capable of transmitting a training packet to train a directional antenna to orient toward the device, in which the training packet does not include an address associated with the device sending the training packet;
   receive a request from a requester to send the training packet to the requester, in order to train the directional antenna of the requester;
   respond to the request by sending a response from the device, in which the response includes an indication that the training packet to orient the directional antenna is appended to the response, the response including the address associated with the device; and
   append the training packet to the response and sending the appended training packet with the response.

Advantageously, the training packet is an optional Beam Refinement Protocol (BRP) packet.

Advantageously, the training packet is a PHY-BRP packet.

Advantageously, the communication protocol is based on an IEEE802.11ad specification.

### BRIEF DESCRIPTION OF THE DRAWINGS

Figure 1 is a diagram of a network in which multiple stations (STAs) are present in the network, in which a particular station communicates with another station and/or with a network control or access point in accordance with one embodiment for practicing the invention.
Figure 2 is a diagram showing directional signal propagation using directional antennas between various devices shown in Figure 1 in accordance with one embodiment for practicing the invention.
Figure 3 is a hardware schematic block diagram showing an embodiment of a wireless communication device in accordance with one embodiment for practicing the invention.
Figure 4 shows a BRP packet structure for D-Band as specified in a WGA specification as applied to a protocol or standard used in accordance with one embodiment for practicing the invention.
Figure 5 shows an optional PHY-BRP packet structure as specified for D-Band in a WGA specification as applied to a protocol or standard used in accordance with one embodiment for practicing the invention.
Figure 6 shows an existing D-Band STA Capability Information Field frame structure that is applicable in accordance with one embodiment for practicing the invention.
Figure 7 shows a revised D-Band STA Capability Information Field frame structure according to one embodiment for practicing the invention in which a PHY-BRP capability bit is used to designate that the particular STA has PHY-BRP capability.
Figure 8 shows a revised D-Band BRP-Response frame structure according to one embodiment for practicing the invention in which a PHY-BRP Follows bit is used to designate that a PHY-BRP follows the BRP- Response.
Figure 9 shows the appending of the PHY-BRP packet to the BRP-Response in accordance with one embodiment for practicing the invention.

### DETAILED DESCRIPTION OF THE INVENTION

The embodiments of the present invention may be practiced in a variety of wireless communication devices that operate in a wireless environment or network. The examples described herein pertain to devices that operate approximately within the 60 GHz Band, which is referred to as D-Band. Note that at 60 GHz, the frequency wavelength is in millimeters and, hence, identified as millimeter-wave band. However, the invention need not be limited to the 60 GHz Band. Other millimeter wave bands that use directional signal propagation may also implement the invention. Furthermore, the examples described herein reference specific standards, protocols, specifications etc., such as the application of the invention based on WGA specifications and/or IEEE 802.11ad specification. Thus, specific frame format and structure are described in reference to theses specifications. However, the invention is not limited to the particular designations noted herein. The invention may be readily adapted for other uses where directional beamforming signals are utilized and that require training to determine antenna direction for establishing a communication link between two wireless devices.

Furthermore, the embodiments are described as establishing a communication link between two wireless stations (STA). However, the wireless link may be between a control point (or an access point) and a station, or between other wireless devices, as well. The term STA is used herein to describe two devices that communicate wirelessly and in which training fields are used to providing training in directing an antenna or antenna array for two STAs to establish a communication link. Thus, used herein, STA pertains to any wireless device, whether acting in a station device role, access point role, control point role, or any other wireless communication role.

As noted above, devices operating in the 60 GHz Band (e.g. D-Band or DBand) according to the WGA (or WiGig) specifications or according to the IEEE 802.11ad specification utilize directional communications to overcome the severe path loss experienced at millimeter wave frequencies. 60 GHz D-Band operations as specified by the WGA (or WiGig), specifies that D-Band devices utilize directional antennas in order to direct the transmitted spectrum energy. One of the protocols/standards being developed utilizing the 60 GHz Band is the IEEE 802.11ad standard. These developing standards call forth certain requirements for devices that are to be compliant to the protocols/standards. One enabling technology for directional signal propagation is beamforming, in which D-Band (and other millimeter wave) devices direct or orient the propagation energy from a directional antenna or an antenna array. Accordingly, beamforming allows a pair of STAs to train their transmit (TX) and receive (RX) antennas to obtain optimal wireless link to communicate with each other. Beamforming is established after the two STAs follow through with a successful training sequence.

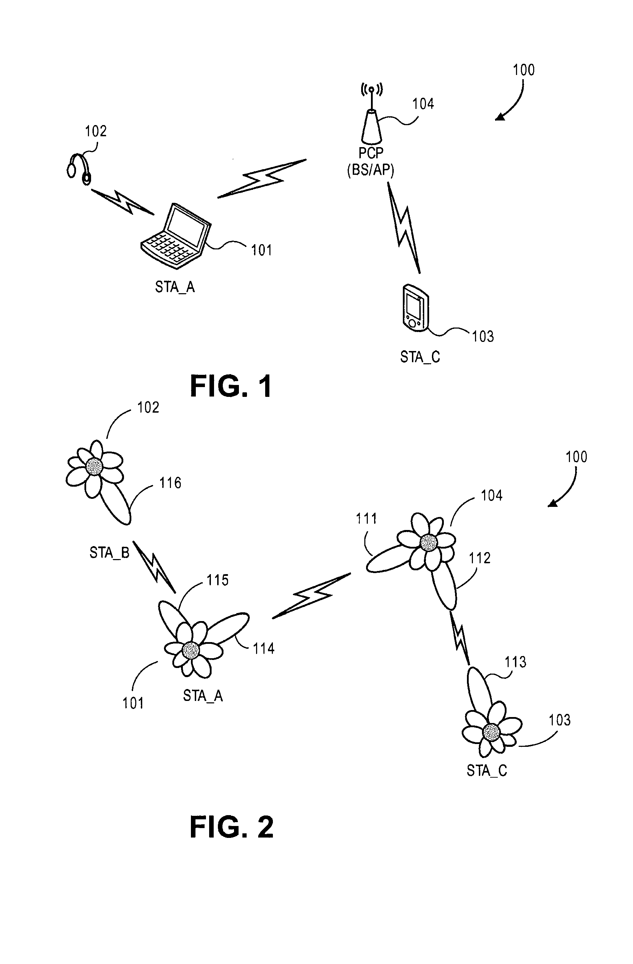

Figure 1 shows a wireless network 100, which may be any type of wireless network. In one embodiment, network 100 may be a Basic Service Set (BSS). In one embodiment, network 100 may be and/or includes a Personal Basic Service Set (PBSS) that forms a personal network. In another embodiment, network 100 may be an infrastructure Basic Service Set that forms a much larger infrastructure network. Still in other embodiments, the network may operate in other wireless environments.

In the shown embodiment, example network 100 of Figure 1 is comprised of a control point 104 and a plurality of stations (STAs) 101, 102, 103 (also noted as STA_A, STA_B and STA_C, respectively), in which one or more STAs may be under control of control point 104. It is to be noted that only three STAs are shown, but network 100 may be comprised of fewer STAs or more STAs than is shown. The control point may be a Base Station (BS), Access Point (AP), Personal BSS Control Point (PCP) or some other device. Hereinafter in the description, the control point is referred to as PCP 104. STAs 101-103 may be stationary or mobile devices. Furthermore, in other embodiments, PCP 104 may also be a station device, in which case the various STAs communicate in peer-to-peer communication.

In the shown example, STAs 101 and 103 communicate with PCP 104, but STA 102 communicates directly with STA 101. Although various wireless devices may be represented by STAs 101-103, in the particular example, STA 101 is a personal computing device, STA 103 is a handheld mobile device (such as a mobile phone or a handheld multimedia player) and STA 102 is a wireless headset that operates with STA 101. As an example, in one embodiment, the wireless headset may be a Bluetooth^{™} device coupled to STA 101. In another example embodiment, STA 102 may be a wireless display device to operate with STA 101. Again, STA 102 may be some other device. One intent of Figure 1 is to illustrate that a device may communicate wirelessly with another device, whether the other device is a control point or a station device. The description below describes wireless communication between two STAs for simplicity of explanation. However, it is to be noted that one or both devices may have other roles, such as a control point, as noted above.

To communicate between two STAs, the STAs employ a particular communication protocol or standard to provide the wireless link. The particular protocol may be applied to devices within the network or may be applied between the pair of devices only. In one embodiment, the network operates within the 60 GHz D-Band as specified by WGA. In other embodiments, the network may operate in other bands or frequency ranges. When operating in the 60 GHz D-Band or other higher bands, the devices use directional antennas to direct the transmitted beam.

In a typical 60 GHz communication procedure, beamforming techniques are utilized to radiate energy in a certain direction with certain beamwidth to communicate between two devices. The directed propagation concentrates transmitted energy toward a target device in order to compensate for significant energy loss in the channel between the two communicating devices. Thus, as shown in Figure 2, PCP 104 propagates a directed beam 111 toward STA 101 and STA 101 propagates a directed beam 114 toward PCP 104 for a directional communication link between PCP 104 and STA 101. Likewise, when PCP 104 and STA 103 want to communicate with each other, PCP 104 propagates a directed beam 112 toward STA 103 and STA 103 propagates a directed beam 113 toward PCP 104 for a directional communication link between the two devices. The directed transmission extends the range of the millimeter-wave communication versus utilizing the same transmitted energy in omni-directional propagation.

Likewise, when STA 101 and STA 102 communicate, respective directed beams 115, 116 are directed toward each other. The illustration of Figure 2 shows a plurality of directed energy lobes emanating from a device, in which one lobe is larger than the other to indicate the directed energy in a particular orientation. Note that with a typical beamforming procedure, the particular device operates by having a plurality of propagation sectors. When the optimal sector is detected or determined, the device orients the antenna (or antenna array) to operate in the optimal sector. Generally, training sequences are used to determine the optimal direction for orienting the antenna. Accordingly, in Figure 2, the larger lobes represent the orienting of the directional antennas for two wireless devices to communicate with each other optimally.

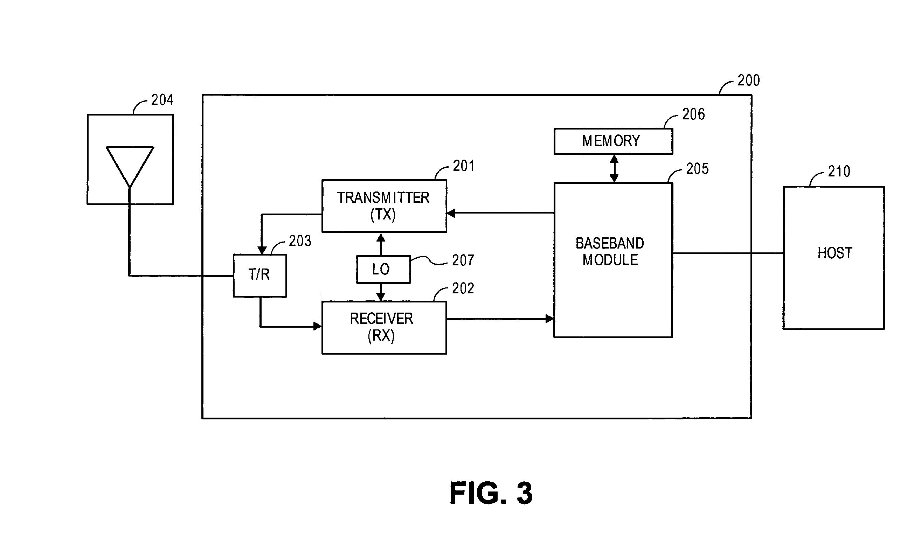

Figure 3 is a schematic block diagram illustrating part of a wireless communication device 200 that includes a transmitter (TX) 201, receiver (RX) 202, local oscillator (LO) 207 and baseband module 205. Baseband module 205 includes a processor to provide baseband processing operations. In some embodiments, baseband module 205 is or includes a digital-signal-processor (DSP). Baseband module 205 is typically coupled to a host unit, applications processor or other unit(s) that provides operational processing for the device and/or interface with a user.

In Figure 3, a host unit 210 is shown. For example, in a notebook or laptop computer, host 210 may represent the computing portion of the computer, while device 200 is utilized to provide WiFi and/or Bluetooth components for communicating wirelessly between the computer and an access point and/or between the computer and a Bluetooth device. Similarly, for a handheld audio or video device, host 210 may represent the application portion of the handheld device, while device 200 is utilized to provide WiFi and/or Bluetooth components for communicating wirelessly between the handheld device and an access point and/or between the handheld device and a Bluetooth device. Alternatively, for a mobile telephone, such as a cellular phone, device 200 may represent the radio frequency (RF) and baseband portions of the phone and host 210 may provide the user application/interface portion of the phone. Furthermore, device 200, as well as host 210, may be incorporated in one or more of the wireless communication devices of Figure 1.

A memory 206 is shown coupled to baseband module 205, which memory 206 may be utilized to store data, as well as program instructions that operate on baseband module 205. Various types of memory devices may be utilized for memory 206. It is to be noted that memory 206 may be located anywhere within device 200 and, in one instance, it may also be part of baseband module 205.

Transmitter 201 and receiver 202 are coupled to an antenna assembly 204 via transmit/receive (T/R) switch module 203. T/R switch module 203 switches the antenna between the transmitter and receiver depending on the mode of operation. In other embodiments, separate antennas may be used for transmitter 201 and receiver 202, respectively. Furthermore, in other embodiments, multiple antennas or antenna arrays may be utilized with device 200 to provide antenna diversity or multiple input and/or multiple output, such as MIMO, capabilities. As pertaining to beamforming above, antenna 204 may be a directional antenna(s) or a directional antenna array to orient antenna 204 in a particular direction for transmitting and/or receiving radio frequency signals.

At frequencies in the lower gigahertz range, omni-directional antennas provide adequate coverage for communicating between wireless devices. Thus, at frequencies about 2.4-5 GHz, one or more omni-directional antenna(s) is/are typically available for transmitting and receiving. However, at higher frequencies, directional antennas with beamforming capabilities are utilized to direct the beam to concentrate the transmitted energy, due to the limited range of the signal. In these instances, directional antennas and antenna arrays allow for directing the beam in a particular direction. The 60 GHz D-Band, as specified by the Wireless gigabit Alliance (WGA or WiGig), specifies that D-Band devices utilize directional antennas in order to direct the transmitted spectrum energy. Device 200 in the present instance is capable of transmitting and receiving in the millimeter wave range, including 60 GHz D-band. Thus, antenna assembly 204 is a directional antenna or an antenna array.

Outbound data for transmission from host unit 210 are coupled to baseband module 205 and converted to baseband signals and then coupled to transmitter 201. Transmitter 201 converts the baseband signals to outbound radio frequency (RF) signals for transmission from device 200 via antenna assembly 204. Transmitter 201 may utilize one of a variety of up-conversion or modulation techniques to convert the outbound baseband signals to outbound RF signal. Generally, the conversion process is dependent on the particular communication standard or protocol being utilized.

In a similar manner, inbound RF signals are received by antenna assembly 204 and coupled to receiver 202. Receiver 202 then converts the inbound RF signals to inbound baseband signals, which are then coupled to baseband module 205. Receiver 202 may utilize one of a variety of down-conversion or demodulation techniques to convert the inbound RF signals to inbound baseband signals. The inbound baseband signals are processed by baseband module 205 and inbound data is output from baseband module 205 to host unit 210.

Baseband module 205 generally operates utilizing one or more communication protocols and provides necessary packetization (or operates in conjunction with other components that provide packetization) and other data processing operations on received signals and signals that are to be transmitted. Accordingly, baseband module 205 also provides the data (e.g. packet) processing described in reference to the invention described herein. In other embodiments, other components may provide the described data operations and packet formulation based on a particular communication protocol.

LO 207 provides local oscillation signals for use by transmitter 201 for up-conversion and by receiver 202 for down-conversion. In some embodiments, separate LOs may be used for transmitter 201 and receiver 202. Although a variety of LO circuitry may be used, in some embodiments, a PLL is utilized to lock the LO to output a frequency stable LO signal based on a selected channel frequency.

It is to be noted that in one embodiment, baseband module 205, LO 207, transmitter 201 and receiver 202 are integrated on the same integrated circuit (IC) chip. Transmitter 201 and receiver 202 are typically referred to as the RF front-end. In other embodiments, one or more of these components may be on separate IC chips. Similarly, other components shown in Figure 3 may be incorporated on the same IC chip, along with baseband module 205, LO 207, transmitter 201 and receiver 202. In some embodiments, the antenna 204 may also be incorporated on the same IC chip as well. Furthermore, with the advent of system-on-chip (SOC) integration, host devices, application processors and/or user interfaces, such as host unit 210, may be integrated on the same IC chip along with baseband module 205, transmitter 201 and receiver 202.

Additionally, although one transmitter 201 and one receiver 202 are shown, it is to be noted that other embodiments may utilize multiple transmitter units and receiver units, as well as multiple LOs. For example, diversity communication and/or multiple input and/or multiple output communications, such as multiple-input-multiple-output (MIMO) communication, may utilize multiple transmitters 201 and/or receivers 202 as part of the RF front-end. Furthermore, it is to be noted that Figure 3 shows basic components for transmitting and receiving and that actual devices may incorporate other components than those shown.

As noted above, beamforming using directional antennas and/or arrays is one technique to provide directional transmission and/or reception of RF signals at millimeter wave bands. One feature of beamforming is beam refinement. Beam refinement is a process where an STA may improve its antenna configuration (or antenna weight and vector) for transmission and/or reception. In a beam refinement protocol procedure, Beam Refinement Protocol (BRP) packets are used to train a receiver.

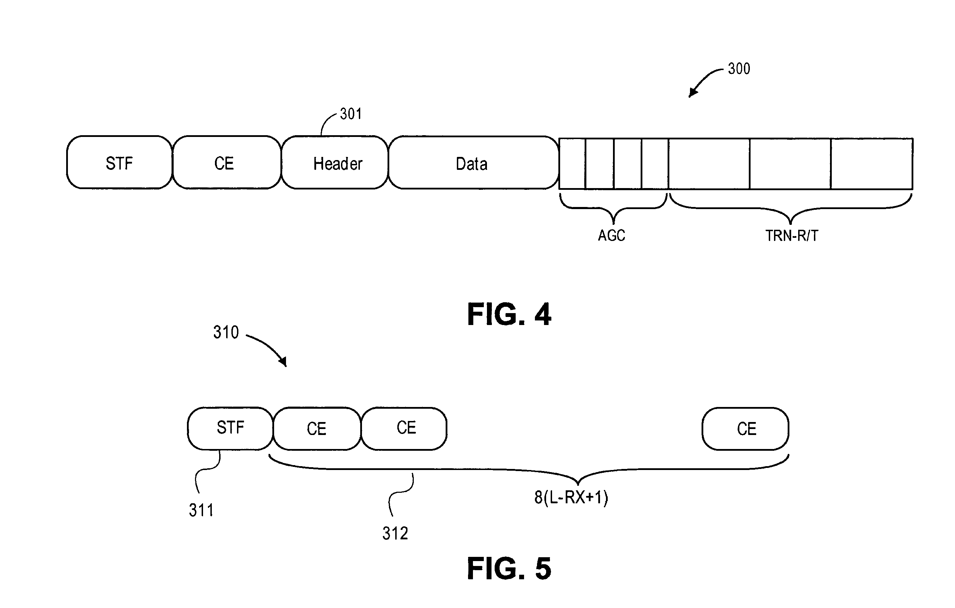

BRP is a process in which a STA trains its receive and transmit antennas (or arrays) to improve its antenna configuration using an iterative procedure. BRP may be used regardless of the antenna configuration supported by a STA. A BRP packet is sent in response to a BRP-REQUEST, in which the request is sent by a device desiring BRP communication to train the directional antennas. When receiving the BRP-Request, the receiving device sends back a BRP-Response, which comprises the BRP packet. Figure 4 shows a typical BRP packet 300 structure comprised of a Short Training field (STF), Channel Estimation field (CE), Header, Data, AGC subfields and TRN-R/T (Train receiver/transmitter) subfields. The BRP packet 300 includes a header 301 (e.g. PHY or MAC header) that provides identification as to the source and intended destination of the BRP packet(s).

One special type of BRP packet is known as a Physical Layer (PHY) BRP packet, or PHY-BRP packet (a singular is used herein, but it is to be noted that the plural, "packets", may apply as well for all usages of "packet"). The PHY-BRP packet is an optional BRP packet that may be utilized in some devices, or it may not. It is optional, since some devices may not have the PHY-BRP packet capability. The PHY-BRP packet was introduced to simplify the receiver antenna weight and vector training for directionality over the structure of BRP packet 300. Figure 5 shows a typical PHY-BRP packet 310 structure comprised of an STF field 311 and a plurality of CE fields 312. STF 311 is the control PHY short training sequence and CE 312 is the channel estimation sequence. CE is repeated 8x(L-RX+1) times, where L-RX is the value of the L-RX field. L-RX field indicates the compressed number of Receive Training (TRN-R) subfields requested by the transmitting STA as part of the beam refinement procedure. Note that a STA may use either the BRP packet 300 or the PHY-BRP packet 310 to respond to a BRP-Request. Of course, if the STA is not capable of the optional PHY_BRP 310, then the STA would respond to the BRP-request with BRP 300. Note that D-Band specifications for IEEE 802.11ad may employ both BRP packet 300 and PHY-BRP 310 structures.

As noted above, there are potentially at least two shortcomings with the current format of the PHY-BRP packet structure 310. First, not every STA utilizes the optional PHY-BRP packet, so there needs to be a way to distinguish when a STA has the PHY-BRP packet capability. Second, the PHY-BRP packet does not have a PHY or MAC (Media Access Control) header (such as header 301 in the BRP packet 300 of Figure 4), so that there may be ambiguity as to the source and intended destination of the transmitted PHY-BRP packet. For example, if a responder to a BRP-Request signal sends out a PHY-BRP packet as part of a BRP-Response signal, there is a possibility that the requestor may receive another PHY-BRP packet from a different STA in the interim. If this happens, the requestor may train the antenna to the wrong STA, instead of the intended STA, simply because there is no way to identify the source and/or the intended destination of the PHY-BRP packet. The embodiments of the invention described below address these concerns or shortcomings.

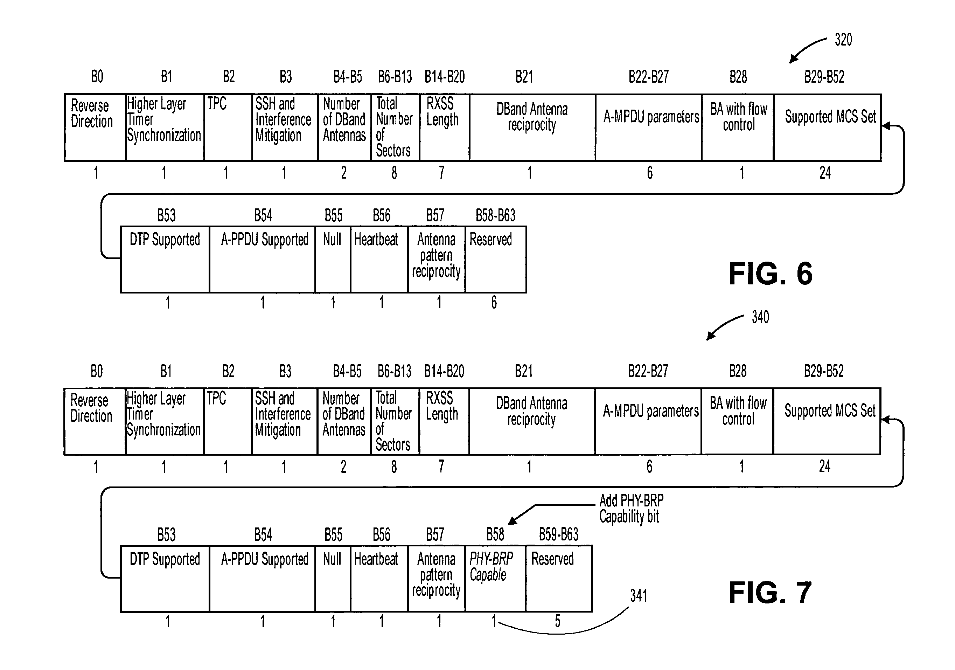

Figure 6 shows a packet structure 320 for an existing D-Band Capability Information Field as specified for a specification of an IEEE 802.11ad standard. The D-Band STA Capability Information Field represents a transmitting STA's capabilities irrespective of the role of the STA. The diagram of Figure 6 identifies each field name and the bit alignment for each field is shown above each respective box. The numbers below the boxes designate the number of bits in each respective field. In total, 64 bits are utilized for D-Band STA Capability Information Field 320. A number of bits (e.g. B58-B63) are currently reserved and, therefore, not utilized. Note that packet 320 does not indicate that the device has (or does not have) the optional PHY-BRP capability. Thus, the device transmitting D-Band Capability Information Field 320 does not identify if it is capable of transmitting a PHY-BRP packet and the recipient of the D-Band Capability Information Field will not know if the sender has the PHY-BRP capability.

Accordingly, in one embodiment of the invention, as shown in Figure 7, one of the reserved bits is used as a PHY-BRP capable bit 341 (Bit B58 in the example) for packet structure 340. When this bit 341 is set (such as to a bit value of "1"), the STA transmitting the D-Band STA Capability Information Field identifies to the recipient that the sender of the D-Band STA Capability Information Field 320 is capable of transmitting the optional PHY-BRP packet. Then, the recipient of D-Band STA Capability Information Field 320 knows that the sender is PHY-BRP capable and can subsequently transmit a BPR-Request, which requests a PHY-BRP packet(s) as part of the BRP-Response. The use of a PHY-BRP capable bit 341 removes the guess work of trying to determine if a device has PHY-BRP capability. The particular STA identifying itself as a PHY-BRP capable device may transmit the PHY-BRP packet when requested to do so when receiving the BRP-Request signal.

The use of the PHY-BRP capable bit solves the first shortcoming noted above, in that there is now a way to identify which STAs have the capability to send PHY-BRP packets. Note that in the example, bit B58 was utilized. It is appreciated that any other reserved bit or bits could be used in other embodiment.

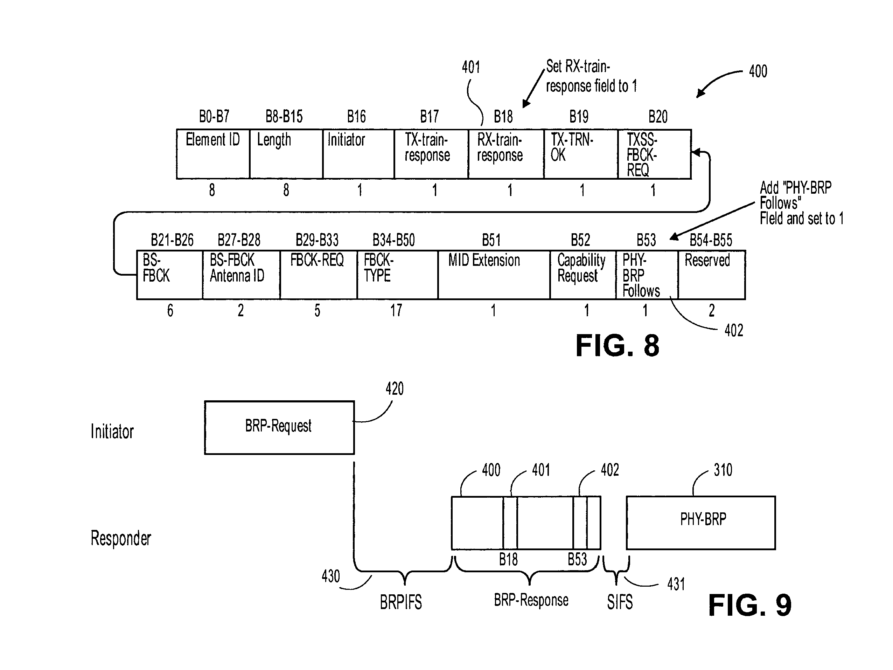

In order to solve the second shortcoming noted above, in that there is no PHY and/or MAC header with the PHY-BRP packet, Figures 8 and 9 illustrate how this problem is resolved in one embodiment. When a PHY-BRP capable STA receives a BRP-Request from another STA, the PHY-BRP capable STA has the ability to transmit a BRP-Response with or without the optional PHY-BRP packet. If the STA does not or cannot send the PHY-BRP packet, the STA may utilize the normal response used for STAs not sending a PHY-BRP packet, such as the format shown in Figure 4. However, if the BRP-Request requests for a PHY-BRP packet, the STA may respond by sending the PHY-BRP packet. Note that the initiator of the BRP-Request knows that the STA has PHY_BRP packet capability due to the STA transmitting the DBand STA Capability Information Field with bit 341 set.

Figure 8 shows a packet structure for a BRP-Response 400. As shown in Figure 8, if the STA sends a receiver training response of any sort to a BRP-request, RX-train-response bit 401 (bit B18 in the example) is set (such as to a bit value of "1") to identify that there is a training response accompanying the BRP-Response from the STA. However, if the STA decides to send a PHY-BRP packet in response to the BRP-Request, then another bit 402, designated a PHY-BRP Follows bit, is set (such as to a bit value of "1") to notify the recipient that a PHY-BRP packet follows the BRP-Response. In the particular example, one of the reserved bit positions (bit B53) is used for PHY-BRP Follows bit 402. It is appreciated that any other reserved bit or bits could be used in other embodiment. The setting of bit 402 in BRP-Response 400 indicates to the sender of the BRP-Request that the PHY-BRP packet(s) will follow the BRP-Response.

The sequence of the initiator sending a BRP-Request with a request for a PHY-BRP packet and the responder responding with a BRP-Response with an appended PHY-BRP packet is shown in Figure 9. The utilization of bit 402 for "PHY-BRP Follows" is an indication that alerts the initiator of BRP-Request 420 that PHY-BRP packet 310 is appended to BRP-Response 400, as shown in Figure 9. Bits 401 and 402 of BRP-Response 400 would be set. Because PHY-BRP packet 310 is appended to BRP-Response 400, the initiator may use the PHY and/or MAC identity present in BRP-Response 400 to obtain the source and destination information for the BRP-Response, as well as for the appended PHY-BRP packet. Accordingly, now a sent PHY-BRP packet is associated with a source and destination, which in this instance is the information in the BRP-Response.

In order to protect the PHY-BRP packet from interference from other stations, the Network Allocation Vector (NAV) of the network is set with the Duration field in BRP-Response 400 to include the time period associated with the appended PHY-BRP packet. As shown in Figure 9, there is a delay 431 (shown as SIFS) between BRP-Response 400 and PHY-BRP packet 310. The NAV is set to alert the network that at least for the period of the duration of the (SIFS)+(PHY-BRP), the STA will be transmitting. In one embodiment, the duration is set as (SIFS)+(PHY-BRP) to ensure enough time to transmit without interference. It is to be noted that other duration periods may be used with other embodiments. In Figure 9, a time period BRPIFS indicates a delay period 430 permitted by the initiator of the BRP-Request to allow a BRP-Response from the responder. In one embodiment, BRPIFS is approximately 3-40 microseconds. Also, in one embodiment, SIFS is approximately 3 microseconds.

Thus, beamforming training within a wireless communication system utilizing a directional antenna is described. Although the invention is described with specific examples pertaining to an IEEE 802.11ad specification, the invention is not limited to such usage. Likewise, the invention is discussed as pertaining to 60 GHz and D-Band, but the invention may be readily adapted to other frequencies and bands that utilize a directional antenna or antenna array.

The embodiments of the present invention have been described above with the aid of functional building blocks illustrating the performance of certain functions. The boundaries of these functional building blocks have been arbitrarily defined for convenience of description. Alternate boundaries could be defined as long as the certain functions are appropriately performed. One of ordinary skill in the art may also recognize that the functional building blocks, and other illustrative blocks, modules and components herein, may be implemented as illustrated or by discrete components, application specific integrated circuits, processors executing appropriate software and the like or any combination thereof.

As may also be used herein, the terms "processing module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may be, or further include, memory and/or an integrated memory element, which may be a single memory device, a plurality of memory devices, and/or embedded circuitry of another processing module, module, processing circuit, and/or processing unit. Such a memory device may be a read-only memory, random access memory, volatile memory, non-volatile memory, static memory, dynamic memory, flash memory, cache memory, and/or any device that stores digital information.

## Claims

1. A method comprising:
transmitting an indication that a device is capable of transmitting a training packet to train a directional antenna to orient toward the device, in which the training packet does not include an address associated with the device sending the training packet;
receiving a request from a requester to send the training packet to the requester, in order to train the directional antenna of the requester;
responding to the request by sending a response from the device, in which the response includes an indication that the training packet to orient the directional antenna is appended to the response, the response including the address associated with the device; and
appending the training packet to the response and sending the appended training packet with the response.

2. The method of claim 1, wherein the training packet is an optional packet to orient the directional antenna.

3. The method of claim 1, wherein the training packet is an optional Beam Refinement Protocol (BRP) packet.

4. The method of claim 1, wherein a value of a selected bit in the response is used as the indication that the training packet to orient the directional antenna is appended to the response.

5. The method of claim 4, wherein a delay period is introduced between the response and the appended training packet.

6. The method of claim 4, wherein the training packet is to be used to train and orient the directional antenna for millimeter wave transmission.

7. The method of claim 4, wherein the training packet is to be used to train and orient the directional antennas for 60 GHz Band transmission.

8. A method comprising:
transmitting an indication that a device is capable of transmitting a Physical-Beam Refinement Protocol (PHY-BRP) packet to train a directional antenna to orient toward the device, in which the PHY-BRP packet does not include an address associated with the device sending the PHY-BRP packet and in which a structure of the PHY-BRP packet is specified by a communication protocol;
receiving a BRP-Request from a requester to send the PHY-BRP packet to the requester, in order to train the directional antenna of the requester;
responding to the request by sending a BRP-Response from the device, in which the BRP-Response includes an indication that the PHY-BRP packet to orient the directional antenna is appended to the BRP-Response, the BRP-Response including the address associated with the device; and
appending the PHY-BRP packet to the BRP-Response and sending the appended PHY-BRP packet with the BRP-response.

9. The method of claim 8, wherein the PHY-BRP packet is an optional BRP packet to orient the directional antenna.

10. The method of claim 9, wherein a value of a selected bit in the BRP-response is used as the indication that the PHY-BRP packet to orient the directional antenna is appended to the BRP-response.

11. The method of claim 10, wherein the indication that the device is capable of transmitting the PHY-BRP packet to train the directional antenna is included in a Capability Information Field sent by the device to identify capabilities of the device.

12. An apparatus comprising:
a transmitter to transmit radio frequency (RF) signals;
a receiver to receive RF signals; and
a baseband processor module, including a processor and coupled to the transmitter and the receiver, to provide processing of packets specified by a communication protocol to:
transmit an indication that a device is capable of transmitting a training packet to train a directional antenna to orient toward the device, in which the training packet does not include an address associated with the device sending the training packet;
receive a request from a requester to send the training packet to the requester, in order to train the directional antenna of the requester;
respond to the request by sending a response from the device, in which the response includes an indication that the training packet to orient the directional antenna is appended to the response, the response including the address associated with the device; and
append the training packet to the response and sending the appended training packet with the response.

13. The apparatus of claim 12, wherein the training packet is an optional Beam Refinement Protocol (BRP) packet.

14. The apparatus of claim 13, wherein the training packet is a PHY-BRP packet.

15. The apparatus of claim 14, wherein the communication protocol is based on an IEEE802.11 ad specification.
